# EUROPEAN PATENT SPECIFICATION

(11) **EP 3 551 497 B1**
(45) Date of publication and mention of the grant of the patent: **23.09.2020**
(21) Application number: 18808542.7
(22) Date of filing: 13.02.2018
(51) Int. Cl.: B60P 3/12, B66C 23/18, B66C 23/00, B66C 23/70, B66C 23/78, B66C 23/86

(54) **TOW TRUCK CAPABLE TO ROTATE VEHICLE IN AIR**
SCHLEPPER MIT FÄHIGKEIT ZUM DREHEN EINES FAHRZEUGS IN DER LUFT
DÉPANNEUSE POUVANT FAIRE PIVOTER UN VÉHICULE DANS L'AIR

(30) Priority: 16.03.2017 TR 201704022
(43) Date of publication of application: 16.10.2019
(73) Proprietor: Erkin Ismakinalari Insaat Sanayi Ithalat Ihracat Ticaret Pazarlama Limited Sirketi, Nazilli/Aydin (TR)
(72) Inventor: ERKIN, Bahtiyar, Aydin (TR)
(74) Representative: Yamankaradeniz, Kemal
(86) International application number: PCT/TR2018/050054
(87) International publication number: WO 2019/004958

(56) References cited:
- EP-A1- 1 707 529
- CN-A- 105 480 140
- US-A- 4 515 282
- US-A- 5 387 071
- US-A- 6 092 975
- US-A1- 2011 150 613

## Description

### The Related Art

This invention relates to rotator tow truck capable to lift and rotate in the air the vehicles which are involved in accidents, tug, tow and lift high capacity weights by means of rope towing arms structured on extension arm.

### The Prior Art

The vehicles becoming unusable because of an accident or travel mechanism not working for any other reasons, are towed by a rotator tow truck having different designs in the related art. However, rotator tow truck already in use, fail to display the desired success for towing and rotating the tipped over vehicles under various field conditions.

The patent application US5387071 discloses a recovery vehicle according to the preamble of claim 1. However, it comprises one upper towing rope with its correspondent upper towing winch and one lower towing rope with its correspondent lower towing winch. This document fails to disclose several ropes and correspondent winches in order to improve the manoeuvrability of the rescued vehicle.

The patent application numbered US7683564 discloses a telescopic crane system comprising a towing hook on the end and an embodiment that can be opened to enable the towing hook to reach a structure or a vehicle at a far distance. Telescopic body is supported by hydraulic piston which, provides knuckle motion to telescopic body, to main body. However, the patent numbered US7683564 does not have capability and technical characteristic to provide access to a vehicle falling in a hole or wild terrain at a far distance.

The system disclosed under patent application numbered US6092975 comprising a fixed body secured onto bottom having outrigger structure and carrying arm system conducting rotary movement on the main body. Rotary moving carrying arm system is supported by rope and tying to vehicle by a single rope and taking the vehicle from the terrain where it has fallen, by means of a single rope is provided. However, the invention numbered US6092975 is not capable to rotate the vehicle having accident and tow it from remote distance. It can perform short distance towing and lifting.

The application numbered US4790710 discloses an embodiment comprising a carrying extending arm having hook at the end and an embodiment moving the arm by means of a piston.

In addition, outriggers are used in order to prevent tip over of cranes of which weight center changes during load carrying task. Outriggers are extended from the body and stabilize the changing weight center of the crane. This extension motion performed outward from body may cause problems such as stuck into obstacles on road side such as barrier bars. For that reason, either the crane cannot approach as required or experiences risk of tip over because outriggers are not opened as required.

As a result, existence of need for cranes capable to lift up and rotate towed vehicles, to approach to the related area as much as possible despite any obstacles by means of motions on vertical and horizontal axis and inadequacy of existing solutions have necessitated improvement in the related art.

### Purpose of the Invention

The present invention relates to tow trucks meeting the needs mentioned above, eliminating some disadvantages and providing some additional advantages.

The purpose of the rotator tow truck disclosed under the invention is to rotate the vehicle in air after lifting up and by means of independent motions of two rope-like towing members located on upper and lower parts of extension arm and thus transfers the vehicle to the desired place in the desired position. Any incidents can be addressed by means of such one crane. Operation period is short and needed labor is low.

Another purpose of the invention is to provide bending of the extension arm up to 40 degrees angles in respect to the plane where crane is, by help of hydraulic piston controlled joint where extension arm is connected, and thus enable it to access places on lower levels. Thus scope of range is increased significantly without need for higher capacity cranes.

Another purpose of the invention is to provide approach of the crane to incident site as close as possible without stuck into any obstacles such as barrier bars, by help of outriggers enabled to step on the ground perpendicularly after rotation on axis perpendicular to ground and opened and then lowered down. This provides advantages in respect to mobility.

In order to achieve the above purposes in the broadest way, a rotator tow truck capable to lift up and rotate towed vehicles in the air, to approach to the related site as much as possible, despite any obstacles, by means of motions on vertical and horizontal axis has been developed. The rotator tow truck comprises a body, main carrier fixed onto the body via rotating system and capable to rotate around vertical axis, main arm connected to the main carrier and capable to move up and down by help of lifting piston, extension arm connected to main arm via joint, having telescopic structure with length adjustability by help of extension piston and capable to move up and down by help of straightening piston, two upper towing members located on upper part of extension arm, driven independent of each by upper driving components and providing lifting and lowering the vehicles via extension arm, two lower towing members located on upper part of extension arm, driven independently by lower driving components and providing lifting and lowering the vehicles on extension arm, an opening arm capable to rotate around vertical axis by help of vertical joint providing connection to the body, a vertical outrigger capable to rotate around horizontal axis by help of horizontal joint providing connection to opening arm.

The structural and characteristics features of the invention and all advantages will be understood better in detailed descriptions with the figures given below and with reference to the figures, and therefore, the assessment should be made taking into account the said figures and detailed explanations.

### Brief Description of the Drawings

In order to make the embodiment and additional members being subject of the present invention as well as the advantages clearer for better understanding, it should be assessed with reference to the following described figures.

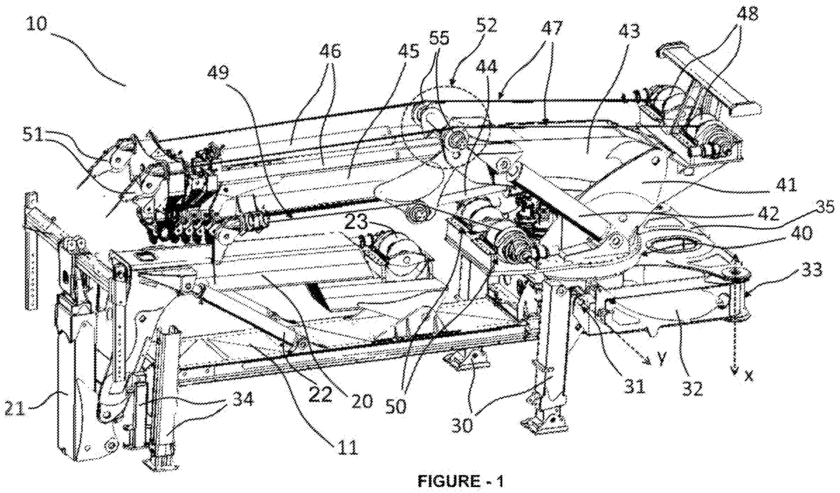

Figure 1 is general view indicating status of rotator tow truck when standby without truck.
Figure 2 is general view indicating the position when the tow truck rotator lifts up a vehicle at low level.
Figure 3 is general view indicating the position when the tow truck rotator rotates in air a vehicle at low level.
Figure 4 is general view indicating the position when the tow truck rotator tows another vehicle.
Figure 5 is general view indicating the position when the tow truck rotator pulls and tows another vehicle from where it is.

**Part References**

| | | | |
|---|---|---|---|
| 10 | Rotator Tow Truck | 45 | Extension booms |
| 11 | Lower chassis | 45a | Upper part of extension booms |
| 11a | Lower chassis side part | 45b | Lower part of extension booms |
| 20 | Lifting arm | 46 | Extension cylinders |
| 21 | Towing arm mechanism | 47 | Upper towing ropes |
| 22 | Lifting arm cylinder | 48 | Upper towing winches |
| 23 | Lifting arm towing winch | 49 | Lower towing ropes |
| 30 | Vertical Outrigger | 50 | Lower towing winches |
| 31 | Horizontal joint | 51 | Load axis alignment |
| 32 | Main Boom of Cross-tap Stabilizer | 52 | Knuckle |
| 33 | Vertical joint | 53 | Load axis alignment roller |
| 34 | Angular Rear Outrigger | 54 | Lower distance adjustment roller |
| 35 | Upper chassis | 55 | Direction roller |
| 40 | Slewing Ring system | 90 | Vehicle |
| 41 | Main body | A | In-air rotation movement |
| 42 | Lifting cylinder | x | Vertical axis |
| 43 | Main boom | y | Horizontal axis |
| 44 | Articulating Cylinder | | |

### Detailed Description of the Invention

The invention comprises at least a main body (41) comprising a lower chassis (11) and connected to the lower chassis (11) via a Slewing Ring system (40) and capable to rotate around vertical axis (x), an upper chassis (35), at least a main boom (43) connected to the main body (41) and capable to move up and down by means of lifting cylinder (42). Besides that, it discloses a rotator tow truck (10) comprising at least an extension booms (45) connected to the main boom (43) via an knuckle (52), capable to move up and down by help of an angle articulating cylinder (44) and telescopic structure allowing length adjustment by help of extension cylinders (46).

The invention relating to the rotator tow truck (10), differently from existing embodiments, in respect to novelty, comprises at least two upper towing ropes (47) located on the upper part of extension booms (45a) of the extension booms (45), driven independently by means of the upper towing winches (48) and providing lifting and lowering the vehicles (90) by means of the extension booms (45). The upper towing rope (47) directs the load axis alignment roller (53). In addition to that, the rotator tow truck (10) comprises at least two lower towing ropes (49) located on the lower part of extension booms (45b) of the extension booms (45), driven independently by means of the lower towing winches (50) and providing lifting and lowering the vehicles (90) by means of the extension booms (45).

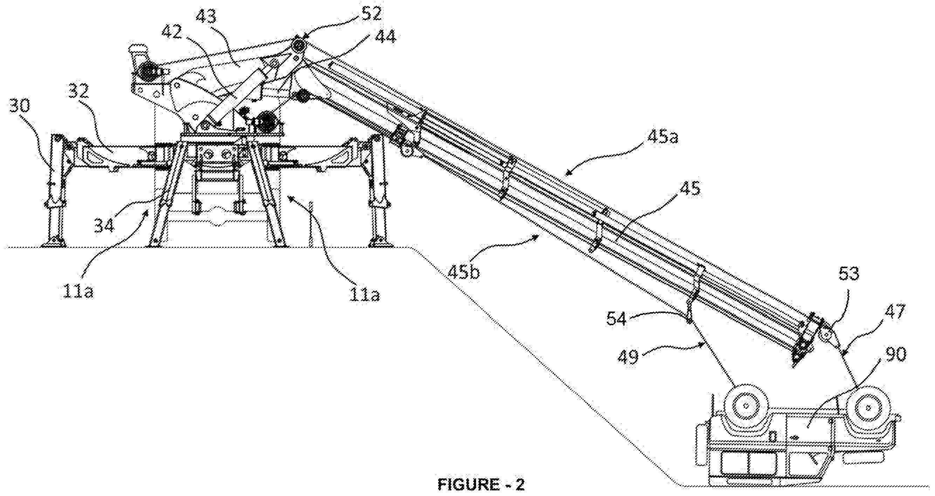

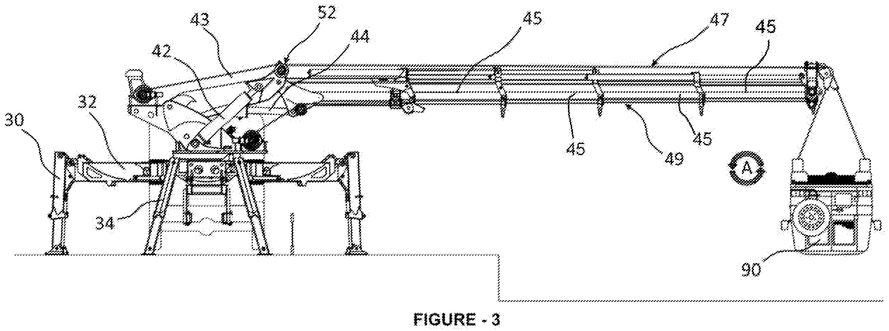

The extension booms (45) of the developed rotator tow truck (10) can bend up to 40 degrees as shown in Figure 2 due to its knuckle (52) structure and can even tow the vehicles (90) from lower levels. The upper towing ropes (47) and the lower towing ropes (49) are connected to the vehicle (90) from different points and are moved independent of each other by means of the upper towing winches (48) and the lower towing winches (50) respectively and in-air rotation movement (A) of the vehicle (90) is provided. Said motion can be seen in Figure 3. direction roller (55) are housed in said knuckle (52) area.

The upper towing ropes (47) and the lower towing ropes (49) preferably comprising steel rope material and providing pulling and in-air rotation movement (A) of vehicle (90), are supported by Load axis alignment (51). The Load axis alignment (51) also provide shifting direction of the upper towing ropes (47) and the lower towing ropes (49). Thus their movement in different directions is possible.

The lifting cylinder (42), the angle Articulating Cylinder (44) and the extension cylinders (46) driving all axis motions of the extension booms (45) which is the main functional factor of the rotator tow truck (10), are hydraulic based operated.

Another characteristic of the disclosed rotator tow truck (10) making it distinguished, is that it can approach to the place where the vehicle (90) to be towed is, as close as possible. For this, the main boom of cross-tap stabilizer (32) capable to rotate around the vertical axis (x) by means of the vertical joint (33) providing connection to the lower chassis (11) and the vertical outrigger (30) capable to rotate around the horizontal axis (y) by means of the horizontal joint (31) providing connection to main boom of cross-tap stabilizer (32) function. In the preferred embodiment as shown in Figure 3, one main boom of cross-tap stabilizer (32) is located on the lower chassis side parts (11a) of the lower chassis (11). Thus weighing centres varying from both sides can be met. Similarly, one angular rear outrigger (34) on each lower chassis side parts (11a) of the lower chassis (11) helps the rotator tow truck (10) to remain in balance.

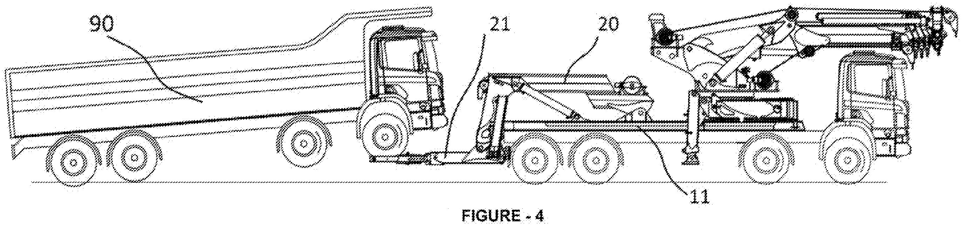

The rotator tow truck (10) also comprises at least a towing arm mechanism (21) providing connection of vehicles (90) to the lower chassis (11) and towing of them and at least a lifting arm (20) comprising a lifting arm cylinder (22) providing up and down movements of the towing arm mechanism (21). The lifting arm (20) also comprises a lifting arm towing winch (23). Figure 4 shows a general view of the rotator tow truck (10) in the position when it tows a vehicle (90). The rotator tow truck (10) not only tows the vehicles (90) from accident site but also tows and transports them.

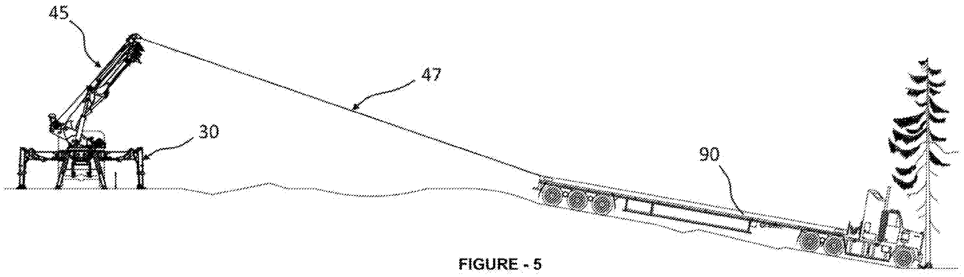

With the knuckle (52) structure, the rotator tow truck (10) capable to tow vehicles (90) from lower levels, to make indefinite rotations by help of the Slewing Ring system (40) and having capacity to lift 40 tons at 3 meters has been developed. It comprises total 4 towing hoists, namely, two upper towing winches (48) and 2 lower towing winches (50). The capacity of two of them is 20 tons while capacity of other two is 10 tons. By help of them, the vehicle (90) involved in accident or tilted over to one side can be hoisted and rotated or towed directly as shown in Figure 5.

During towing and rotating operations, firstly, the main boom of cross-tap stabilizer (32), the vertical outriggers (30) and the angular rear outriggers (34) are opened together and the rotator tow truck (10) is put in balance. Then the Slewing Ring system (40), the lifting cylinder (42), the angular Articulating Cylinder (44) and extension cylinders (46) are moved and facing the extension booms (45) in correct position and distance to the vehicle (90) to be towed is provided. Then depending on the operation to be performed, the related ones of the upper towing winches (48) and the lower towing winches (50) are started and the upper towing ropes (47) and the lower towing ropes (49) are moved and towing and straightening the vehicle (90) is provided. After this stage, the vehicle (90) is lowered onto ground or the towing arm mechanism (21) is connected. Knuckled extension booms (45) after operation takes its place on the lower chassis (11) of the rotator tow truck (10) and balanced distribution of weight is provided. The lower towing ropes (49) are associated with the lower distance adjustment roller (54) and distanced by use of these reels.

## Claims

1. A rotator tow truck (10) comprising
- having a main lower chassis (11);
- At least a main body (41) connected to said lower chassis (11) via a Slewing Ring system (40) and rotating around vertical axis (x),
- At least a main boom (43) connected to said main body (41) and capable to move up and down by help of lifting cylinder (42),
- at least an extension booms (45) connected to said main boom (43) via an knuckle (52), capable to move up and down by help of an angle Articulating Cylinder (44) and allowing length adjustment by help of extension cylinders (46),
and it is **characterized in** comprising
- upper towing ropes (47) located on said extension booms (45), driven independent of each other by help of upper towing winches (48) and connected to the vehicles (90),
- lower towing ropes (49) located on said extension booms (45), driven independent of each other by help of lower towing winches (50) and connected to the vehicles (90).

2. The rotator tow truck (10) according to claim 1 and it is **characterized in** comprising at least a Load axis alignment (51) providing change of direction of and supporting said upper towing ropes (47) and/or lower towing ropes (49).

3. The rotator tow truck (10) according to claim 1 and it is **characterized in** comprising at least two upper towing ropes (47) located on upper part of extension booms (45a) of said extension booms (45).

4. The rotator tow truck (10) according to claim 1 and it is **characterized in** comprising at least two lower towing ropes (49) located on lower part of extension booms (45b) of said extension booms (45).

5. The rotator tow truck (10) according to claim 1 and it is **characterized in that** said upper towing ropes (47) and/or lower towing ropes (49) are ropes.

6. The rotator tow truck (10) according to claim 1 and it is **characterized in that** said lifting cylinder (42) and/or angle articulating Cylinder (44) and/or extension cylinders (46) are of hydraulic nature.

7. The rotator tow truck (10) according to claim 1 and it is **characterized in** comprising
- at least an main boom of cross-tap stabilizer (32) capable to rotate around vertical axis (x) by means of vertical joint (33) providing connection to said lower chassis (11),
- At least a vertical outrigger (30) capable to rotate around horizontal axis (y) by means of horizontal joint (31) providing connection to said main boom of cross-tap stabilizer (32).

8. The rotator tow truck (10) according to claim 7 and it is **characterized in that** at least one said main boom of cross-tap stabilizer (32) is provided on each lower chassis side parts (11a) of lower chassis (11).

9. The rotator tow truck (10) according to claim 7 and it is **characterized in that** comprising at least an angular rear outriggers (34) connected to said lower chassis (11) and extending to ground at a certain angle.

10. The rotator tow truck (10) according to claim 9 and it is **characterized in that** at least one said angular rear outriggers (34) is provided on each lower chassis side parts (11a) of lower chassis (11).

11. The rotator tow truck (10) according to claim 1 and it is **characterized in that** comprising
- at least a towing arm mechanism (21) providing connection of vehicles (90) to lower chassis (11) and towing of them,
- at least a lifting arm (20) comprising lifting arm cylinder (22) providing up and down movements of the towing arm mechanism (21),
- and a lifting arm towing winch (23).

12. The rotator tow truck (10) according to claim 1 and it is **characterized in that** comprising lower distance adjustment roller (54) associated to lower towing ropes (49).

13. The rotator tow truck (10) according to claim 1 and it is **characterized in that** comprising direction roller (55) housed in said knuckle (52) area.

## Patentansprüche

1. Rotatorabschleppwagen (10), umfassend
- mit einem unteren Hauptfahrgestell (11);
- mindestens einen Hauptkörper (41), der über ein Drehkranzsystem (40) mit dem unteren Fahrgestell (11) verbunden ist und sich um die vertikale Achse (x) dreht,
- mindestens einen Hauptausleger (43), der mit dem Hauptkörper (41) verbunden ist und sich mit Hilfe eines Hubzylinders (42) aufwärts und abwärts bewegen kann,
- mindestens einen Verlängerungsausleger (45), der über einen Achsschenkel (52) mit dem Hauptausleger (43) verbunden ist, der sich mit Hilfe eines Winkelgelenkzylinders (44) aufwärts und abwärts bewegen kann und eine Längeneinstellung mit Hilfe von Verlängerungszylindern (46) ermöglicht,
und wobei er **dadurch gekennzeichnet ist, dass** er Folgendes umfasst:
- obere Zugseile (47), die sich an den Verlängerungsauslegern (45) befinden, mit Hilfe von oberen Zugwinden (48) unabhängig voneinander angetrieben werden und mit den Fahrzeugen (90) verbunden sind;
- untere Zugseile (49), die sich an den Verlängerungsauslegern (45) befinden, mit Hilfe von unteren Zugwinden (50) unabhängig voneinander angetrieben werden und mit den Fahrzeugen (90) verbunden sind.

2. Rotatorabschleppwagen (10) nach Anspruch 1 und **dadurch gekennzeichnet, dass** er mindestens eine Lastachsenausrichtung (51) umfasst, die eine Richtungsänderung der oberen Zugseile (47) und/oder der unteren Zugseile (49) bereitstellt und diese stützt.

3. Rotatorabschleppwagen (10) nach Anspruch 1 und **dadurch gekennzeichnet, dass** er mindestens zwei obere Zugseile (47) umfasst, die sich an dem oberen Teil der Verlängerungsausleger (45a) der Verlängerungsausleger (45) befinden.

4. Rotatorabschleppwagen (10) nach Anspruch 1 und **dadurch gekennzeichnet, dass** er mindestens zwei untere Zugseile (49) umfasst, die sich an dem unteren Teil der Verlängerungsausleger (45b) der Verlängerungsausleger (45) befinden.

5. Rotatorabschleppwagen (10) nach Anspruch 1 und **dadurch gekennzeichnet, dass** die oberen Zugseile (47) und/oder die unteren Zugseile (49) Seile sind.

6. Rotatorabschleppwagen (10) nach Anspruch 1 und **dadurch gekennzeichnet, dass** der Hubzylinder (42) und/oder der Winkelgelenkzylinder (44) und/oder die Verlängerungszylinder (46) hydraulischer Natur sind.

7. Rotatorabschleppwagen (10) nach Anspruch 1 und **dadurch gekennzeichnet, dass** er Folgendes umfasst:
- mindestens einen Hauptausleger des Cross-Tap-Stabilisators (32), der sich mittels einer vertikalen Fuge (33), die eine Verbindung mit dem unteren Fahrgestell (11) bereitstellt, um die vertikale Achse (x) drehen kann,
- mindestens einen vertikalen Ausleger (30), der sich mittels einer horizontalen Fuge (31), die eine Verbindung mit dem Hauptausleger des Cross-Tap-Stabilisators (32) bereitstellt, um die horizontale Achse (y) drehen kann.

8. Rotatorabschleppwagen (10) nach Anspruch 7 und **dadurch gekennzeichnet, dass** an jedem unteren Fahrgestellseitenteil (11a) des unteren Fahrgestells (11) mindestens ein Hauptausleger des Cross-Tap-Stabilisators (32) bereitgestellt ist.

9. Rotatorabschleppwagen (10) nach Anspruch 7 und **dadurch gekennzeichnet, dass** er mindestens einen winkeligen hinteren Ausleger (34) umfasst, der mit dem unteren Fahrgestell (11) verbunden ist und sich in einem bestimmten Winkel zum Boden erstreckt.

10. Rotatorabschleppwagen (10) nach Anspruch 9 und **dadurch gekennzeichnet, dass** an jedem unteren Fahrgestellseitenteil (11a) des unteren Fahrgestells (11) mindestens ein winkeliger hinterer Ausleger (34) bereitgestellt ist.

11. Rotatorabschleppwagen (10) nach Anspruch 1 und **dadurch gekennzeichnet, dass** er Folgendes umfasst:
- mindestens einen Zugarmmechanismus (21), der Verbindung von Fahrzeugen (90) mit dem unteren Fahrgestell (11) und das Abschleppen davon bereitstellt,
- mindestens einen Hubarm (20), der einen Hubarmzylinder (22) umfasst, der Aufwärts- und Abwärtsbewegungen des Zugarmmechanismus (21) bereitstellt,
- und eine Hubarmzugwinde (23).

12. Rotatorabschleppwagen (10) nach Anspruch 1 und **dadurch gekennzeichnet, dass** er eine Einstellrolle (54) mit geringerem Abstand umfasst, die mit unteren Zugseilen (49) verbunden ist.

13. Rotatorabschleppwagen (10) nach Anspruch 1 und **dadurch gekennzeichnet, dass** er eine Richtungsrolle (55) umfasst, die in dem Bereich des Achsschenkels (52) untergebracht ist.

## Revendications

1. Dépanneuse à rotateur (10) comprenant
- la présence d'un châssis inférieur principal (11) ;
- au moins un corps principal (41) raccordé audit châssis inférieur (11) par l'intermédiaire d'un système de couronne d'orientation (40) et tournant autour de l'axe vertical (x),
- au moins une flèche principale (43) reliée audit corps principal (41) et capable de se déplacer vers le haut et vers le bas à l'aide d'un vérin de levage (42),
- au moins une flèche d'extension (45) reliée à ladite flèche principale (43) par l'intermédiaire d'un joint d'articulation (52), capable de se déplacer vers le haut et vers le bas à l'aide d'un vérin d'articulation angulaire (44) et permettant un réglage de la longueur à l'aide de vérins d'extension (46),
et elle est **caractérisée** en comprenant
- des câbles de traction supérieurs (47) situés sur lesdites flèches d'extension (45), entraînés indépendamment les uns des autres à l'aide de treuils de traction supérieurs (48) et reliés aux véhicules (90),
- des câbles de traction inférieurs (49) situés sur lesdites flèches d'extension (45), entraînés indépendamment les uns des autres à l'aide de treuils de traction inférieurs (50) et reliés aux véhicules (90).

2. Dépanneuse à rotateur (10) selon la revendication 1, elle est **caractérisée** en comprenant au moins un alignement d'axe de charge (51) permettant un changement de direction desdits câbles de traction supérieurs (47) et/ou les câbles de traction inférieurs (49) et supportant ceux-ci.

3. Dépanneuse à rotateur (10) selon la revendication 1, caractérisé en comprenant au moins deux câbles de traction supérieurs (47) situés sur la partie supérieure de flèches d'extension (45a) desdites flèches d'extension (45).

4. Dépanneuse à rotateur (10) selon la revendication 1, et elle est **caractérisée** en comprenant au moins deux câbles de traction inférieurs (49) situés sur la partie inférieure de flèches d'extension (45b) desdites flèches d'extension (45).

5. Dépanneuse à rotateur (10) selon la revendication 1 et elle est **caractérisée en ce que** lesdits câbles de traction supérieurs (47) et/ou lesdits câbles de traction inférieurs (49) sont des câbles.

6. Dépanneuse à rotateur (10) selon la revendication 1 et elle est **caractérisée en ce que** ledit vérin de levage (42) et/ou le vérin d'articulation angulaire (44) et/ou les vérins d'extension (46) sont de nature hydraulique.

7. Dépanneuse à rotateur (10) selon la revendication 1 et elle est **caractérisée** en comprenant
- au moins une flèche principale de stabilisateur à prise croisée (32) capable de tourner autour de l'axe vertical (x) au moyen d'un joint vertical (33) assurant le raccordement audit châssis inférieur (11),
- au moins un stabilisateur vertical (30) capable de tourner autour de l'axe horizontal (y) au moyen d'un joint horizontal (31) assurant le raccordement à ladite flèche principale du stabilisateur à prise croisée (32).

8. Dépanneuse à rotateur (10) selon la revendication 7 et elle est **caractérisée en ce qu'**au moins ladite flèche principale de stabilisateur à prise croisée (32) est disposée sur chaque partie latérale de châssis inférieur (11a) du châssis inférieur (11).

9. Dépanneuse à rotateur (10) selon la revendication 7 et elle est **caractérisée** en comprenant au moins un stabilisateur arrière angulaire (34) relié audit châssis inférieur (11) et s'étendant jusqu'au sol selon un certain angle.

10. Dépanneuse à rotateur (10) selon la revendication 9 et elle est **caractérisée en ce qu'**au moins ledit stabilisateurs arrière angulaire (34) est disposé sur chaque partie latérale de châssis inférieur (11a) du châssis inférieur (11).

11. Dépanneuse à rotateur (10) selon la revendication 1 et elle est **caractérisée** en comprenant
- au moins un mécanisme de bras de traction (21) assurant le raccordement des véhicules (90) au châssis inférieur (11) et la traction de ceux-ci,
- au moins un bras de levage (20) comprenant un vérin (22) de bras de levage assurant des mouvements vers le haut et vers le bas du mécanisme de bras de traction (21),
- et un treuil de traction (23) de bras de levage.

12. Dépanneuse à rotateur (10) selon la revendication 1 et elle est **caractérisée** en comprenant un rouleau de réglage de distance inférieur (54) associé à des câbles de traction inférieurs (49).

13. Dépanneuse à rotateur (10) selon la revendication 1 et elle est **caractérisée** en comprenant un rouleau de direction (55) logé dans ladite zone de joint d'articulation (52).
